# EUROPÄISCHE PATENTSCHRIFT

(11) **EP 2 491 363 B1**
(45) Veröffentlichungstag und Bekanntmachung des Hinweises auf die Patenterteilung: **12.11.2014**
(21) Anmeldenummer: 10760276.5
(22) Anmeldetag: 03.09.2010
(51) Int. Cl.: G01L 19/00, G01L 19/14

(54) **DRUCKSENSOR, INSBESONDERE FÜR BREMSVORRICHTUNGEN**
PRESSURE SENSOR, IN PARTICULAR FOR BRAKING DEVICES
CAPTEUR DE PRESSION, EN PARTICULIER POUR DISPOSITIFS DE FREINAGE

(30) Priorität: 19.10.2009 DE 102009045790
(43) Veröffentlichungstag der Anmeldung: 29.08.2012
(73) Patentinhaber: Robert Bosch GmbH, 70442 Stuttgart (DE)
(72) Erfinder: KAISER, Harry, 71706 Markgroeningen (DE); ARLT, Andreas, 71672 Marbach (DE)
(86) Internationale Anmeldenummer: PCT/EP2010/062953
(87) Internationale Veröffentlichungsnummer: WO 2011/047919

(56) Entgegenhaltungen:
- EP-A1- 0 284 633
- EP-A2- 0 922 946
- DE-A1- 4 314 844
- DE-A1-102007 031 980
- US-A- 5 331 857

## Beschreibung

### Stand der Technik

Die vorliegende Erfindung betrifft einen Drucksensor zur Erfassung eines Druckes, insbesondere bei Bremsvorrichtungen von Fahrzeugen.

Drucksensoren sind aus dem Stand der Technik in unterschiedlichen Ausgestaltungen bekannt. Drucksensoren werden beispielsweise in Hydraulikbauteilen von Bremsanlagen integriert, um einen Druck des Fluids zu erfassen. Aus der DE 10 2007 031 980 A1 ist beispielsweise ein Drucksensor bekannt, bei dem eine Druckmesszelle mit einem rechteckigen Schaltungsträger verbunden ist, an dessen gegenüberliegendem Ende Kontaktelemente angeordnet sind. Am Schaltungsträger ist seitlich eine Leiterplatte angeordnet, welche mit dem Schaltungsträger verbunden ist. Dieser Drucksensor hat sich grundsätzlich bewährt, jedoch muss bei zukünftigen Anwendungen, insbesondere im Bereich von Bremsanlagen, eine weitere Miniaturisierung der Bauteile erfolgen. Weiterhin verwendet der bekannte Drucksensor Leitklebeverbindungen. Hierbei hat sich jedoch herausgestellt, dass derartige Leitklebeverbindungen nicht immer über die gesamte Lebensdauer eines Fahrzeugs eine sichere Funktion gewährleisten.

Die US 5331857 A beschreibt einen zylinderförmig aufgebauten Drucksensor mit einem Verbindungsflansch, einer Druckzelle, einer Leiterplatte und einer Abdeckplatte mit Kontaktstiften.

### Offenbarung der Erfindung

Der erfindungsgemäße Drucksensor mit den Merkmalen des Anspruchs 1 weist demgegenüber den Vorteil auf, dass er sehr kompakt und klein ist und dabei eine hohe Robustheit aufweist. Dies ermöglicht eine lange Lebensdauer des Drucksensors, so dass dieser, beispielsweise bei einer Verwendung in Fahrzeugen, über die gesamte Lebensdauer des Fahrzeugs, ohne ausgetauscht werden zu müssen, funktionsfähig bleibt. Der erfindungsgemäße Drucksensor weist dabei sowohl eine hohe Lebensdauer der elektrischen Verbindungen auf, als auch eine hohe mechanische Festigkeit. Dies wird erfindungsgemäß dadurch erreicht, dass eine Leiterplatte des Drucksensors in einer Längsachse des Drucksensors angeordnet ist. Dabei liegt ein Schwerpunkt der Leiterplatte in der Längsachse des Drucksensors. Hierbei ist die Leiterplatte senkrecht zu einer Grundebene des Drucksensors angeordnet. Eine Verbindung mit dem messenden Medium erfolgt über einen Verbindungsflansch mit einem Kanal, an dem auch eine Druckmesszelle zur Druckerfassung angeordnet ist.

Gemäß der Erfindung umfasst der Drucksensor eine Kontaktniet-Trägerplatte, welche an der Leiterplatte an einem dem Verbindungsflansch entgegengesetzten Ende angeordnet ist. Die Kontaktniet-Trägerplatte umfasst Kontaktnieten für einen lösbaren elektrischen Kontakt mit weiteren Bauteilen, insbesondere einem Steuergerät. Hierdurch kann eine lösbare Verbindung des Drucksensors zum Steuergerät realisiert werden, welche insbesondere ohne spezielle Werkzeuge gelöst und wieder hergestellt werden kann.

Um eine schnelle und einfache Kontaktierung der Leiterplatte mit der Kontaktniet-Trägerplatte zu ermöglichen, ist ein Kontaktblech vorgesehen, welches an der Leiterplatte befestigt ist. Das Kontaktblech ist vorzugsweise mittels einer Lötverbindung an der Leiterplatte fixiert.

Die Unteransprüche zeigen bevorzugte Weiterbildungen der Erfindung.

Vorzugsweise ist die Leiterplatte beidseitig mit elektrischen Bauteilen bestückt. Durch die erfindungsgemäße zentrale Anordnung der Leiterplatte ist es möglich, dass auf beiden Seiten elektronische Bauteile für die Leiterplatte angeordnet werden können. Dadurch kann eine Gesamtlänge der Leiterplatte reduziert werden, so dass insgesamt eine Baulänge des Drucksensors signifikant verkleinert werden kann.

Vorzugsweise ist eine elektrische Verbindung zwischen der Druckmesszelle und der Leiterplatte als Bondverbindung oder als Schweißverbindung oder als Lötverbindung ausgeführt. Erfindungsgemäß werden somit bewährte elektrische Verbindungen verwendet, welche hohe Lebensdaueranforderungen erfüllen.

Bewusst wird hierbei auf andere bekannte Verbindungsarten, wie z.B. Leitkleben mit einem Silberleitkleber verzichtet, um über die gesamte Einsatzdauer des Drucksensors eine sichere Funktion zu gewährleisten.

Besonders bevorzugt ist die Leiterplatte symmetrisch im Drucksensor angeordnet, so dass die Leiterplatte in der Lage ist, von außen auf den Drucksensor wirkende Kräfte, beispielsweise Federkräfte von Kontaktfedern, welche von außen auf den Drucksensor drücken, aufzunehmen. Hierbei sei angemerkt, dass erfindungsgemäß unter den Begriff "symmetrische Position" eine Position der Leiterplatte verstanden wird, bei der eine Mittelachse der Leiterplatte in der Längsachse des Drucksensors liegt.

Weiter bevorzugt umfasst der Drucksensor einen Schaltungsträger, welcher mechanisch mit dem Verbindungsflansch und der Leiterplatte verbunden ist. Der Schaltungsträger dient insbesondere als Trägerelement für die Leiterplatte. Eine elektrische Verbindung erfolgt dabei von der Druckmesszelle über den Schaltungsträger zur Leiterplatte.

Besonders bevorzugt ist dabei zwischen der Leiterplatte und dem Schaltungsträger und/oder zwischen dem Schaltungsträger und dem Verbindungsflansch eine mechanische Steckverbindung ausgebildet. Die Steckverbindung ist vorzugsweise durch Vorsehen von Nasen und entsprechend gebildeten Ausnahmen hergestellt.

Besonders bevorzugt erfolgt eine elektrische Verbindung der Druckmesszelle mit der Leiterplatte über den Schaltungsträger. Hierdurch können sichere elektrische Verbindungen zwischen den jeweiligen Bauteilen durch sehr einfache Verbindungen, bei denen die jeweiligen Verbindungspunkte jeweils in einer gemeinsamen Ebene liegen, realisiert werden. Durch diese zweistufige elektrische Verbindung kann eine besonders kostengünstige Herstellung erreicht werden.

Weiter bevorzugt sind die elektrischen Verbindungen zwischen der Leiterplatte und der Kontaktniet-Trägerplatte ebenfalls mittels konventioneller Verbindungen wie einer Bondverbindung, einer Schweißverbindung oder einer Lötverbindung, ausgeführt.

Um einen Schutz der Leiterplatte und anderen Bauteilen des Drucksensors bereitzustellen, ist vorzugsweise eine Schutzhülse vorgesehen. Die Schutzhülse bildet einen Mantel, um die Bauteile des Drucksensors herum und kann beispielsweise aufgesteckt werden. Vorzugsweise umfasst die Schutzhülse dabei federnde Laschen, welche für eine Fixierung in Mantelbereiche des Schaltungsträgers eingreifen. Alternativ oder zusätzlich kann die Schutzhülse auch mittels einer umlaufenden Schweißverbindung oder mit mehreren Schweißpunkten mit dem Verbindungsflansch verbunden werden.

Der erfindungsgemäße Drucksensor wird vorzugsweise in Fahrzeugen bei Hydraulikanwendungen, insbesondere bei Bremsen, verwendet. Da bei modernen Bremsanlagen bis zu vier Drucksensoren eingebaut werden, kann durch den erfindungsgemäßen Drucksensor eine große Bauraumersparnis realisiert werden.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Schnittansicht eines Drucksensors gemäß dem Ausführungsbeispiel der Erfindung,
- Figur 2: eine schematische Schnittansicht des Drucksensors von Figur 1, senkrecht zur Schnittansicht von Figur 1,
- Figur 3 bis 8: schematische, perspektivische Ansichten von verschiedenen Montageschritten von Bauteilen des Drucksensors,
- Figur 9 und 10: perspektivische Ansichten des Drucksensors ohne und mit Schutzhülle, und
- Figur 11: eine perspektivische Ansicht zur Erläuterung einer Verbindung der Leiterplatte mit einer Kontaktniet-Trägerplatte.

### Bevorzugte Ausführungsform der Erfindung

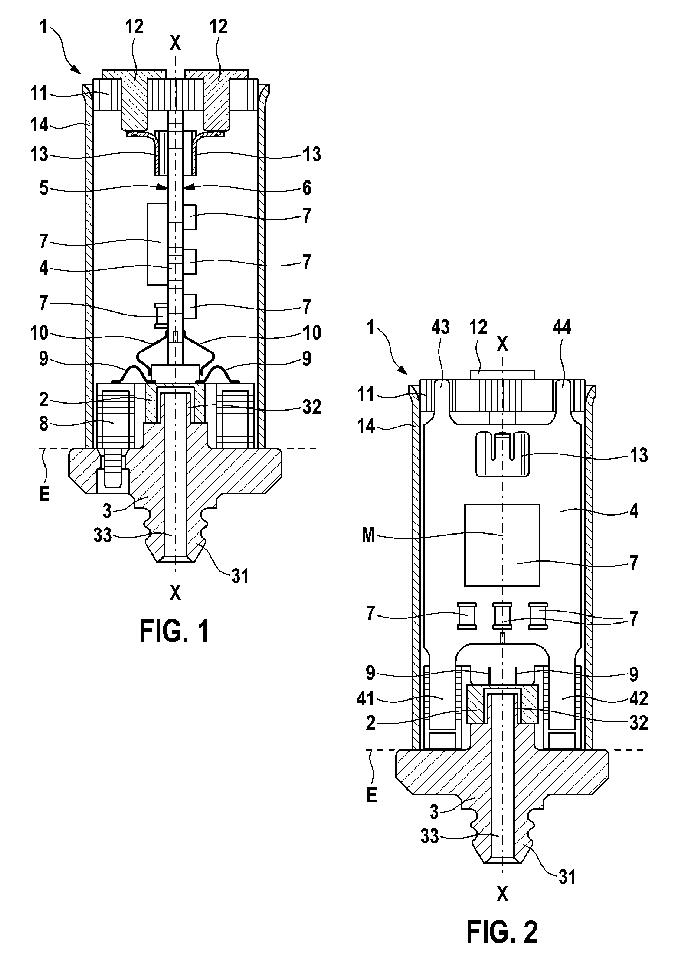

Nachfolgend wird unter Bezugnahme auf die Figuren 1 bis 11 ein Drucksensor 1 gemäß einem bevorzugten Ausführungsbeispiel der Erfindung im Detail beschrieben.

Wie aus den Figuren 1 und 2 ersichtlich ist, umfasst der Drucksensor 1 eine Druckmesszelle 2, welche an einem Verbindungsflansch 3 angeordnet ist. Der Verbindungsflansch 3 weist einen Anschluss 31, eine Aufnahme 32 zur Aufnahme der Druckmesszelle 2 und einen Fluidkanal 33 auf. Der Verbindungsflansch 3 ist über den Anschluss 31 mit einem Hydraulikblock (nicht dargestellt verbunden, so dass Fluid, dessen Druck zu messen ist, über den Fluidkanal 33 in den Verbindungsflansch 3 gelangt. Am Ende des Fluidkanals 33 ist dann die Druckmesszelle 2 zur Erfassung des Drucks des Fluids angeordnet.

Die Druckmesszelle 2 weist an ihrer Oberfläche mehrere Kontaktflächen 2a auf, über welche entsprechende Signale der Druckmesszelle abgegriffen werden können. Der Drucksensor 1 umfasst ferner eine Leiterplatte 4, einen Schaltungsträger 8 und eine Kontaktniet-Trägerplatte 11.

Die Druckmesszelle 2 wird vorzugsweise mittels einer Schweißverbindung mit dem Verbindungsflansch 3 verbunden. Der Verbindungsflansch 3 kann dann durch Einpressen dauerhaft in einem Hydraulikblock o.ä. fixiert werden. Der Schaltungsträger 8 kann als sogenanntes MID-2K-Bauteil ausgebildet sein, bei dem ein Kunststoffvorspritzling aus einem galvanisierbaren Kunststoff mit einem zweiten, nicht galvanisierbaren Kunststoff teilweise überspritzt wird und die teilweise hervorstehenden Oberflächen des Vorspritzlings mittels eines galvanischen Prozesses dann mit einer metallischen Oberfläche beschichtet werden, welche dann die Bondflächen 8a bilden. Hierdurch können auf einfache Weise dreidimensionale, außenliegende Kontaktflächen oder Leiterplatten hergestellt werden. Alternativ kann der Schaltungsträger 8 auch als Spritzteil mit Einlegeteilen oder in Heißprägetechnik hergestellt werden.

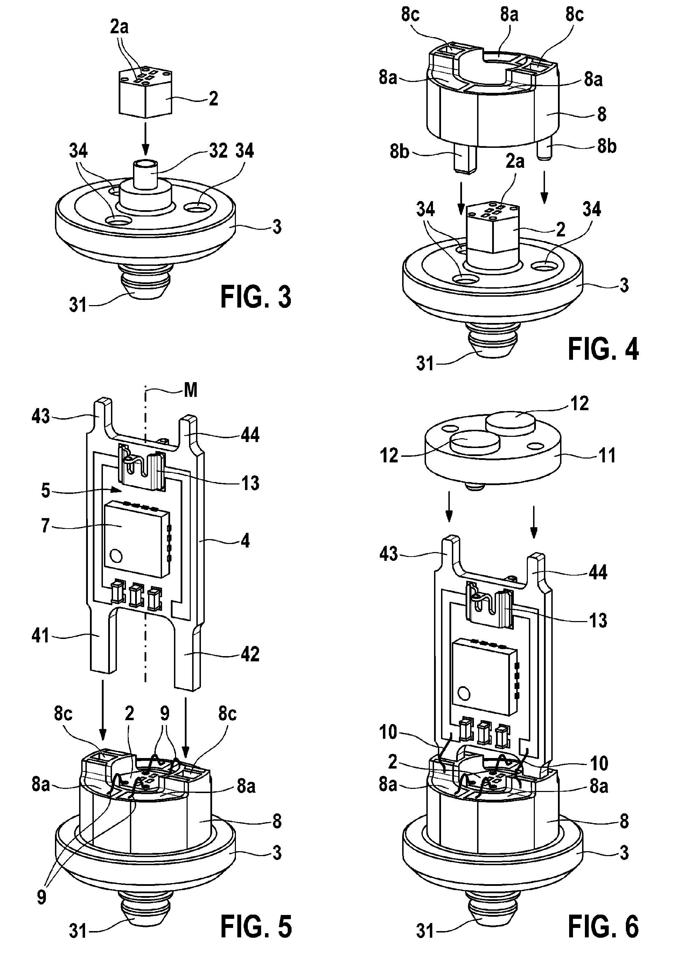

Die Leiterplatte 4 weist eine erste Seite 5 und eine zweite Seite 6 auf, wobei elektronische Bauteile 7 sowohl an der ersten Seite 5 als auch der zweiten Seite 6 angeordnet sind. Eine Mittelachse M der Leiterplatte liegt dabei in einer Längsachse X-X des Drucksensors 1. Hierdurch ist die Leiterplatte 2 symmetrisch im Drucksensor 1 angeordnet. Die Leiterplatte 4 weist ferner vier Stecknasen 41, 42, 43, 44 auf, wobei jeweils zwei Stecknasen an einander entgegengesetzten Enden der Leiterplatte 4 angeordnet sind (siehe Figur 5).

Der Schaltungsträger 8 ist ein Zwischenbauteil, welches um die Druckmesszelle 2 herum angeordnet ist und an einer Stirnseite mehrere Bondflächen 8a aufweist. Ferner umfasst der Schaltungsträger 8 drei Zapfen 8b, welche eine mechanische Verbindung mit dem Verbindungsflansch 3 bereitstellen, wobei die Zapfen 8b in entsprechend gebildeten Aufnahmen 34 des Verbindungsflansches 3 aufgenommen werden (siehe Figur 4).

Der Schaltungsträger 8 umfasst ferner zwei Aufnahmen 8c, welche zur Aufnahme der Stecknasen 41 und 42 dienen (vgl. Figur 5). Hierbei ist vorzugsweise eine formschlüssige Presspassung vorgesehen.

Wie insbesondere aus den Figuren 5, 6 und 9 ersichtlich ist, sind zwischen den Kontaktflächen 2a der Druckmesszelle 2 und den Bondflächen 8a des Schaltungsträgers 8 elektrische Verbindungen mittels Bonddrähten 9 hergestellt. Zwischen den Bondflächen 8a des Schaltungsträgers und der Leiterplatte 4 sind ebenfalls Bondverbindungen 10 vorgesehen. Somit werden sichere elektrische Verbindungen zwischen der Druckmesszelle und der Leiterplatte hergestellt, wobei die elektrischen Verbindungen jeweils nur Verbindungen in einer Ebene bereitstellen müssen, d.h., die Kontaktpunkte zwischen der Druckmesszelle und den Bondflächen 8a liegen in einer Ebene und die Kontaktpunkte der Bondflächen 8a und der Leiterplatte liegen ebenfalls in einer Ebene, wobei die Bondflächen 8a durch ein flächiges Kontaktstück bereitgestellt werden, welches in einem Winkel von 90° gebogen ist (siehe Figur 5).

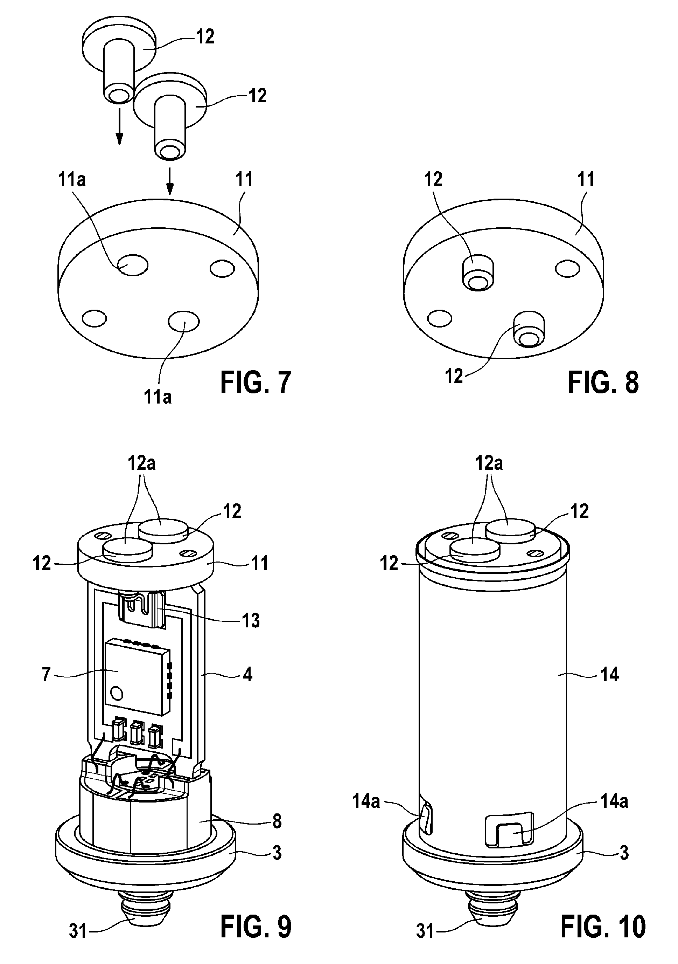

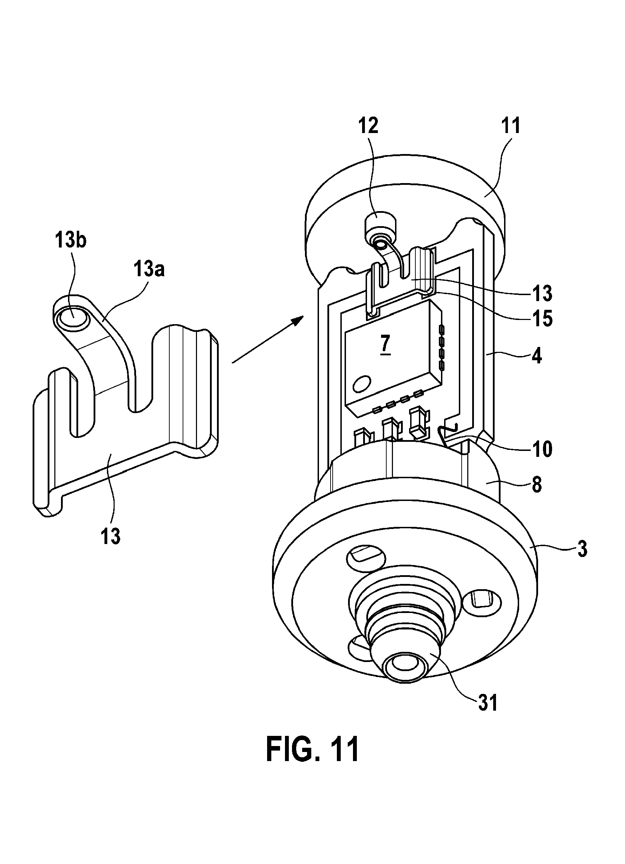

Die Kontaktniet-Trägerplatte 11 umfasst, wie insbesondere aus den Figuren 7 und 8 ersichtlich ist, zwei Kontaktnieten 12, welche durch Durchgangsöffnungen 11a in der Kontaktniet-Trägerplatte 11 eingeführt sind. Die Kontaktnieten 12 weisen flächige, ebene Kontaktbereiche 12a auf, welche einen Kontakt mit einem Steuergerät einer Bremsanlage ermöglichen. Die elektrische Kontaktierung über die Kontaktnieten 12 ist dabei ohne spezielle Werkzeuge montierbar bzw. lösbar, so dass in jeder Situation, z.B. auch bei einer Panne eines Fahrzeugs, ein schneller und problemloser Austausch möglich ist. Die Kontaktnieten 12 sind ihrerseits mittels Kontaktblechen 13 mit der Leiterplatte 4 verbunden. Dies ist insbesondere aus Figur 11 ersichtlich, in welcher ein Kontaktblech 13 zur besseren Darstellung nochmals vergrößert dargestellt ist. Das Kontaktblech 13 weist einen federnden bogenförmigen Fortsatz 13a auf, welcher für einen formschlüssigen Kontakt mit der Niet 12 eine Öffnung 13b aufweist. Das Kontaktblech 13 selbst ist mittels einer Lötverbindung 15 mit der Leiterplatte 4 verbunden. Dabei können die Kontaktbleche 13 schon vor der Montage auf die Leiterplatte 4 aufgelötet werden.

Erfindungsgemäß ergibt sich somit, wie aus der Zusammenschau der Figuren 3 bis 11 ersichtlich ist, eine einfache und schnelle Montage. Die mechanischen Verbindungen sind über Stecklösungen realisiert und die elektrischen Verbindungen zwischen der Leiterplatte und der Druckmesszelle sind über einfache und schnell auszuführende Bondverbindungen 9, 10 jeweils in einer Ebene realisiert. In einem letzten Schritt wird dabei eine zylindrische Schutzhülse 14 über den Drucksensor übergestreift, welche mittels federnden Laschen 14a in Mantelbereiche des Schaltungsträgers 8 eingreifen.

Erfindungsgemäß kann somit ein Drucksensor 1 bereitgestellt werden, welcher bewährte und langlebige elektrische Verbindungen einerseits und schnelle und sichere mechanische Verbindungen andererseits aufweist. Dabei weist der erfindungsgemäße Drucksensor 1 einen sehr kleinen und kompakten Aufbau und dementsprechend auch nur ein geringes Gewicht auf. Durch die symmetrische Position der Leiterplatte 4 kann die Leiterplatte 4 auch Kräfte, welche von außen über die Kontaktnieten 12 in den Drucksensor eingebracht werden, aufnehmen. Die Leiterplatte 4 übernimmt somit auch eine Trägerfunktion. Falls notwendig, können die mechanischen Steckverbindungen auch zusätzlich noch mittels eines Fixierklebers stabilisiert werden. Die senkrechte Anordnung der Leiterplatte 4 ermöglicht dabei eine beidseitige Bestückung, so dass der Drucksensor, insbesondere in Längsrichtung, sehr kurzbauend ist.

## Patentansprüche

1. Drucksensor zur Erfassung eines Druckes eines Mediums, umfassend
- einen Verbindungsflansch (3) mit einem Kanal (33) zur Verbindung mit dem zu messenden Medium,
- eine Druckmesszelle (2), welcher über den Kanal (33) der Druck zuführbar ist, und
- eine Leiterplatte (4), welche derart angeordnet ist, dass die Leiterplatte in einer Längsachse (X-X) des Drucksensors liegt, und **gekennzeichnet durch**
- eine Kontaktniet-Trägerplatte (11), welche an der Leiterplatte (4) an einem dem Verbindungsflansch (3) entgegengesetzten Ende angeordnet ist, wobei die Kontaktniet-Trägerplatte (11) Kontaktnieten (12) für einen lösbaren elektrischen Kontakt aufweist, wobei eine elektrische Verbindung zwischen der Leiterplatte (4) und den Kontaktnieten (12) mittels eines Kontaktblechs (13) ausgeführt ist, und wobei das Kontaktblech (13) einen federnden bogenförmigen Fortsatz (13a) aufweist, welcher für einen formschlüssigen Kontakt mit der Niet (12) eine Öffnung (13b) aufweist.

2. Drucksensor nach Anspruch 1, **dadurch gekennzeichnet, dass** die Leiterplatte (4) beidseitig mit elektronischen Bauteilen (7) bestückt ist.

3. Drucksensor nach Anspruch 1 oder 2, **dadurch gekennzeichnet, dass** eine Mittelachse (M) der Leiterplatte (4) in der Längsachse (X-X) des Drucksensors liegt.

4. Drucksensor nach einem der vorhergehenden Ansprüche, **dadurch gekennzeichnet, dass** eine elektrische Verbindung der Druckmesszelle (2) zur Leiterplatte (4) mittels einer Bondverbindung oder einer Schweißverbindung oder einer Lötverbindung ausgeführt ist.

5. Drucksensor nach einem der vorhergehenden Ansprüche, ferner umfassend einen Schaltungsträger (8), welcher mechanisch mit dem Verbindungsflansch (3) und der Leiterplatte (4) verbunden ist, wobei eine elektrische Verbindung von der Druckmesszelle (2) über den Schaltungsträger (8) zur Leiterplatte (4) erfolgt.

6. Drucksensor nach Anspruch 5, **gekennzeichnet durch** eine mechanische Steckverbindung (41, 42, 8c) zwischen der Leiterplatte (4) und dem Schaltungsträger (8) und/oder eine mechanische Steckverbindung (34, 8b) zwischen dem Verbindungsflansch (3) und dem Schaltungsträger (8).

7. Drucksensor nach einem der Ansprüche 4 bis 6, **dadurch gekennzeichnet, dass** elektrische Verbindungen zwischen der Druckmesszelle (2) und dem Schaltungsträger (8) im Wesentlichen in einer Ebene liegen und/oder dass elektrische Verbindungen zwischen dem Schaltungsträger (8) und der Leiterplatte (4) im Wesentlichen in einer Ebene liegen.

8. Drucksensor nach Anspruch 1, **dadurch gekennzeichnet, dass** das Kontaktblech (13) mittels einer Lötverbindung (15) mit der Leiterplatte (4) verbunden ist.

9. Drucksensor nach einem der vorhergehenden Ansprüche, ferner umfassend eine aufsteckbare Schutzhülse (14).

10. Drucksensor nach Anspruch 9, **dadurch gekennzeichnet, dass** die Schutzhülse (14) federnde Laschen (14a) aufweist, welche für eine Fixierung in Mantelbereiche des Schaltungsträgers (8) eingreifen und/oder dass die Schutzhülse (14) mittels einer Schweißverbindung mit dem Verbindungsflansch (3) verbunden ist.

## Claims

1. Pressure sensor for recording a pressure of a medium, comprising
- a connecting flange (3) with a channel (33) for connection to the medium which is to be measured,
- a pressure-measuring cell (2) to which the pressure can be supplied via the channel (33), and
- a printed circuit board (4) which is arranged in such a way that the printed circuit board is situated in a longitudinal axis (X-X) of the pressure sensor, and **characterized by**
- a contact rivet mounting board (11) which is arranged on the printed circuit board (4) at an end which is opposite the connecting flange (3), wherein the contact rivet mounting board (11) has contact rivets (12) for releasable electrical contact, wherein an electrical connection between the printed circuit board (4) and the contact rivets (12) is made by means of a metal contact plate (13), and wherein the metal contact plate (13) has a resilient bent projection (13a) which has an opening (13b) for interlocking contact with the rivet (12).

2. Pressure sensor according to Claim 1, **characterized in that** the printed circuit board (4) is fitted with electronic components (7) on both sides.

3. Pressure sensor according to Claim 1 or 2, **characterized in that** a centre axis (M) of the printed circuit board (4) is situated in the longitudinal axis (X-X) of the pressure sensor.

4. Pressure sensor according to one of the preceding claims, **characterized in that** an electrical connection between the pressure-measuring cell (2) and the printed circuit board (4) is made by means of a bonded connection or a welded connection or a soldered connection.

5. Pressure sensor according to one of the preceding claims, further comprising a circuit mount (8) which is mechanically connected to the connecting flange (3) and the printed circuit board (4), wherein an electrical connection is established from the pressure-measuring cell (2) to the printed circuit board (4) by means of the circuit mount (8).

6. Pressure sensor according to Claim 5, **characterized by** a mechanical plug connection (41, 42, 8c) between the printed circuit board (4) and the circuit mount (8) and/or a mechanical plug connection (34, 8b) between the connecting flange (3) and the circuit mount (8).

7. Pressure sensor according to one of Claims 4 to 6, **characterized in that** electrical connections between the pressure-measuring cell (2) and the circuit mount (8) are situated substantially in one plane, and/or **in that** electrical connections between the circuit mount (8) and the printed circuit board (4) are situated substantially in one plane.

8. Pressure sensor according to Claim 1, **characterized in that** the metal contact plate (13) is connected to the printed circuit board (4) by means of a soldered connection (15).

9. Pressure sensor according to one of the preceding claims, further comprising a protective sleeve (14) which can be plug-mounted.

10. Pressure sensor according to Claim 9, **characterized in that** the protective sleeve (14) has resilient lugs (14a) which engage in casing regions of the circuit mount (8) for fixing purposes, and/or **in that** the protective sleeve (14) is connected to the connecting flange (3) by means of a welded connection.

## Revendications

1. Capteur de pression permettant de détecter une pression d'un agent, comprenant :
- une bride de jonction (3) dotée d'un canal (33) permettant d'assurer la jonction avec l'agent à mesurer ;
- une cellule de mesure de pression (2) pouvant être alimentée en pression via le canal (33) ;
- une plaque conductrice (4) disposée de telle sorte que la plaque conductrice se place dans un axe longitudinal (X-X) du capteur de pression ; et **caractérisé par** :
- une plaque de support de rivet de contact (11) disposée au niveau de la plaque conductrice (4), au niveau d'une extrémité opposée à la bride de jonction (3), la plaque de support de rivet de contact (11) comportant des rivets de contact (12) permettant de réaliser un contact électrique amovible, une liaison électrique entre la plaque conductrice (4) et les rivets de contact (12) étant réalisée à l'aide d'une tôle de contact (13) et la tôle de contact (13) comportant une saillie (13a) élastique en forme d'arc comportant une ouverture (13b) permettant de réaliser un contact par complémentarité de formes avec le rivet (12).

2. Capteur de pression selon la revendication 1, **caractérisé en ce que** la plaque conductrice (4) est dotée des deux côtés de composants électroniques (7).

3. Capteur de pression selon la revendication 1 ou 2, **caractérisé en ce qu'**un axe central (M) de la plaque conductrice (4) se place dans l'axe longitudinal (X-X) du capteur de pression.

4. Capteur de pression selon l'une quelconque des revendications précédentes, **caractérisé en ce qu'**une liaison électrique de la cellule de mesure de pression (2) avec la plaque conductrice (4) est réalisée au moyen d'une liaison par adhérence ou d'une liaison soudée ou d'une liaison braisée.

5. Capteur de pression selon l'une quelconque des revendications précédentes, comprenant en outre un support de connexion (8) relié de façon mécanique à la bride de jonction (3) et à la plaque conductrice (4), une liaison électrique se produisant de la cellule de mesure de pression (2) à la plaque conductrice (4) en passant par le support de connexion (8).

6. Capteur de pression selon la revendication 5, **caractérisé par** la présence d'une liaison d'enfichage mécanique (41, 42, 8c) prévue entre la plaque conductrice (4) et le support de connexion (8) et/ou d'une liaison d'enfichage mécanique (34, 8b) prévue entre la bride de jonction (3) et le support de connexion (8).

7. Capteur de pression selon l'une quelconque des revendications 4 à 6, **caractérisé en ce que** les liaisons électriques prévues entre la cellule de mesure de pression (2) et le support de connexion (8) se placent pour l'essentiel dans un plan et/ou que les liaisons électriques prévues entre le support de connexion (8) et la plaque conductrice (4) se placent pour l'essentiel dans un plan.

8. Capteur de pression selon la revendication 1, **caractérisé en ce que** la tôle de contact (13) est reliée à la plaque conductrice (4) au moyen d'une liaison braisée (15).

9. Capteur de pression selon l'une quelconque des revendications précédentes, comprenant en outre une douille de protection (14) enfichable.

10. Capteur de pression selon la revendication 9, **caractérisé en ce que** la douille de protection (14) comporte des brides (14a) élastiques s'engrenant pour réaliser une fixation dans les régions d'enveloppe du support de connexion (8) et/ou que la douille de protection (14) est reliée à la bride de jonction (3) au moyen d'une liaison soudée.
